# EUROPEAN PATENT APPLICATION

(11) **EP 2 506 030 A1**
(43) Date of publication of application: **03.10.2012**
(21) Application number: 12161437.4
(22) Date of filing: 27.03.2012
(51) Int. Cl.: G01S 7/03, G01S 13/36, G01B 7/02, G01B 15/00, G01D 5/12, G01V 3/12

(54) **Sensor Assembly for Detecting Materials Using a Microwave Emitter and Method**

(30) Priority: 30.03.2011 US 201113075734
(71) Applicant: General Electric Company, Schenectady, NY 12345 (US)
(72) Inventor: Summers, Sean Kelly, Minden, NV 89423 (US); Jensen, Raymond Verle, Minden, NV 89423 (US)
(74) Representative: Picker, Madeline Margaret

(57) **Abstract**

A sensor assembly (124) for use in a system (100) is provided. The sensor assembly includes at least one probe (202) for detecting the presence of a material (110) within the system, wherein the probe includes a microwave emitter (206). The microwave emitter generates at least one electromagnetic field (209) from at least one microwave signal, wherein a loading is induced to the microwave emitter when the material interacts with the electromagnetic field. A data conduit (204) is coupled to the microwave emitter, wherein at least one loading signal representative of the loading is reflected within the data conduit from the microwave emitter. At least one signal processing device (200) is coupled to the microwave emitter via the data conduit. The signal processing device is configured to receive the loading signal and to generate an electrical output that is representative of the presence of the material, wherein the electrical output is usable by an operator and/or the system.

## Description

### BACKGROUND OF THE INVENTION

The field of the invention relates generally to systems used to detect a presence of a material and, more particularly, to a sensor assembly for use in detecting the presence of a material using a microwave emitter.

At least some known sensor systems are used to detect the presence of materials, such as metals, liquids, or other substance variations. The detection of the presence or a material or lack of the presence of the material may be used in various applications, such as control systems. For example, such detection methods may be used with a switch application, a level detector, and/or a counter for applications used in various systems such as, but not limited to, manufacturing systems, processing systems, chemical systems and safety systems.

The detection of materials may be performed using eddy current sensors, magnetic pickup sensors, or capacitive sensors. However, because the measuring range of such sensors is limited, the locations that such sensors may be used are generally limited. Moreover, the operation of these sensors typically limits them to only conductive materials without complex arrangements. As such, the usefulness of known detection systems may be limited.

### BRIEF DESCRIPTION OF THE INVENTION

In one embodiment, a sensor assembly for use in a system is provided. The sensor assembly includes at least one probe for detecting the presence of a material within the system, wherein the probe includes a microwave emitter. The microwave emitter generates at least one electromagnetic field from at least one microwave signal, wherein a loading is induced to the microwave emitter when the material interacts with the electromagnetic field. A data conduit is coupled to the microwave emitter, wherein at least one loading signal representative of the loading is reflected within the data conduit from the microwave emitter. At least one signal processing device is coupled to the microwave emitter via the data conduit. The signal processing device is configured to receive the loading signal and to generate an electrical output that is representative of the presence of the material, wherein the electrical output is usable by an operator and/or the system.

In another embodiment, a method for detecting a presence of a material is provided. At least one microwave signal is transmitted to a microwave emitter. At least one electromagnetic field is then generated by the microwave emitter based on the microwave signal. Moreover, a loading is induced to the microwave emitter when the material interacts with the electromagnetic field, wherein at least one loading signal representative of the loading is reflected within a data conduit from the microwave emitter. The loading signal is then received by at least one signal processing device. The signal processing device then generates an electrical output that is representative of the presence of the material, wherein the electrical output is usable by an operator and/or the system.

In yet another embodiment, a system for use in detecting a presence of a material is provided. The system includes at least one sensor assembly and an electrical device that is coupled to the sensor assembly. The sensor assembly includes at least one probe for detecting the presence of a material within the system, wherein the probe includes a microwave emitter. The microwave emitter generates at least one electromagnetic field from at least one microwave signal, wherein a loading is induced to the microwave emitter when the material interacts with the electromagnetic field. A data conduit is coupled to the microwave emitter, wherein at least one loading signal representative of the loading is reflected within the data conduit from the microwave emitter. At least one signal processing device is coupled to the microwave emitter via the data conduit. The signal processing device is configured to receive the loading signal and to generate an electrical output that is representative of the presence of the material, wherein the electrical output is usable by an operator and/or the system.

### BRIEF DESCRIPTION OF THE DRAWINGS

Fig. 1 is a block diagram of an example detection system that may be used in detecting the presence of a material;
Fig. 2 is a block diagram of an example sensor assembly that may be used with the detection system shown in Fig. 1;
Fig. 3 is a block diagram of an alternative embodiment of a detection system for use in detecting the presence of a material using the sensor assembly shown in Fig. 2; and
Fig. 4 is a flow chart of an example method that may be implemented to detect the presence of a material using the sensor assembly shown in Fig. 2.

### DETAILED DESCRIPTION OF EMBODIMENTS OF THE INVENTION

The example methods, apparatus, and systems described herein overcome at least some disadvantages associated with known detection systems used to detect the presence of a material. In particular, the embodiments described herein provide a sensor assembly that detects the presence of a material using a microwave emitter. Moreover, the detection of the presence of or a detection of the lack of the presence of the material, i.e., a non-detection, may be used in various applications, such as control systems. For example, such detection methods may be used with a switch application, a level detector, and/or a counter for applications used in various systems such as, but not limited to, manufacturing systems, processing systems, chemical systems and/or safety systems. Further, the use of a microwave emitter for detecting materials provides a longer measuring range and a higher frequency response, as compared to known eddy current sensors, magnetic pickup sensors, and/or capacitive sensors that are used with known systems.

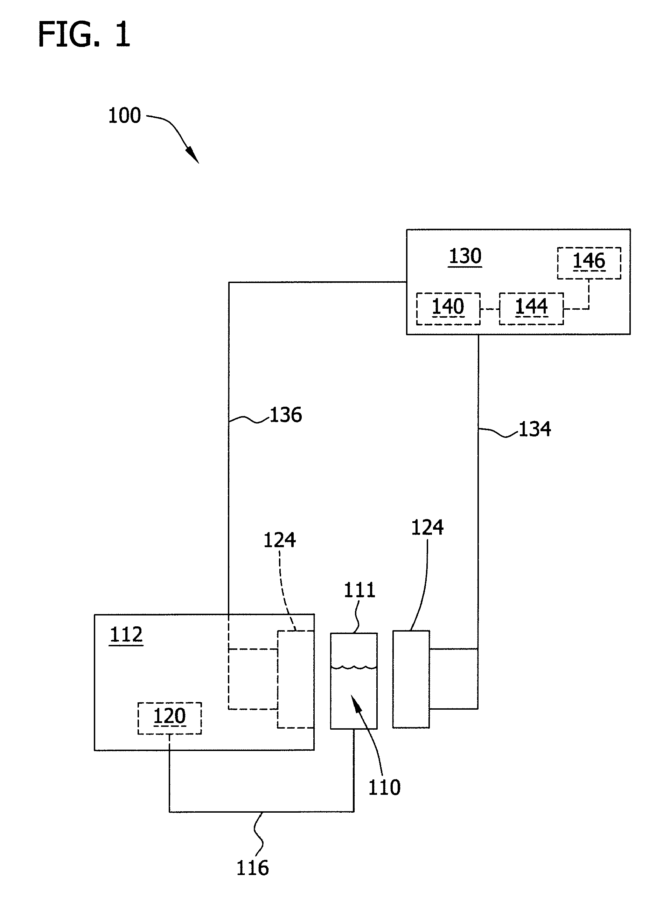

Fig. 1 illustrates an example system 100 that may be used to detect the presence of a material 110. In the example embodiment, material 110 is a liquid and more specifically, material 110 is a residual fuel. Alternatively, material 110 may be a solid, such as a metal, a non-metallic object, and/or any other product, or a variation of a substance, that enables system 100 to function as described herein. In the example embodiment, material 110 is contained within a reservoir 111, such as a sump. Moreover, in the example embodiment, system 100 includes a machine 112. In the example embodiment, machine 112 may be a gas turbine engine. While the example embodiment includes a gas turbine engine, the present invention is not limited to any one particular machine and/or system, and one of ordinary skill in the art will appreciate that the current invention may be used in connection with other machines and/or systems.

In the example embodiment, machine 112 is coupled to reservoir 111 via a drain pipe 116. It should be noted that, as used herein, the term "couple" is not limited to a direct mechanical and/or an electrical connection between components, but may also include an indirect mechanical and/or electrical connection between multiple components. Moreover, in the example embodiment, drain pipe 116 channels material 110 from a combustor section 120 of machine 112 to reservoir 111, wherein material 110 may be periodically sampled and transferred to a disposal means (not shown) such as a material tank, waste tank, and/or other disposal means.

In the example embodiment, system 100 includes at least one sensor assembly 124 that monitors reservoir 111. Sensor assembly 124 is a proximity sensor assembly 124 that is located in close proximity to reservoir 111 for use in detecting the presence of material 110 in reservoir 111. Sensor assembly 124 includes a probe (not shown in Fig. 1) that includes an emitter (not shown in Fig. 1), wherein the probe is a microwave probe that includes a microwave emitter.

Sensor assembly 124 uses one or more microwave signals to detect the presence of, or to detect the lack of presence, i.e., a non-presence, of material 110. As used herein, the term "microwave" refers to a signal or a component that receives and/or transmits signals having frequencies between about 300 Megahertz (MHz) and to about 300 Gigahertz (GHz).

Each sensor assembly 124 is positioned in any relative location within system 100. Moreover, in the example embodiment, system 100 includes at least one electrical device 130 that is coupled to one or more sensor assemblies 124. More specifically, sensor assemblies 124 are coupled to electrical device 130 via a data conduit 134 or via a data conduit 136. Alternatively, sensor assemblies 124 may be wirelessly coupled to electrical device 130.

In the example embodiment, electrical device 130 is a diagnostic system. Electrical device 130 may be any other type of an electrical device, such as a control system and/or a display device, which enables system 100 to function as described herein. Electrical device 130 includes a computer 140 that processes and/or analyzes one or more signals generated by sensor assembly 124. As used herein, the term "process" refers to performing an operation on, adjusting, filtering, buffering, and/or altering at least one characteristic of a signal. Computer 140 receives commands from an operator via a keyboard 144. An associated monitor 146, such as, but not limited to, a liquid crystal display (LCD) and a cathode ray tube, enables the operator to observe data received from computer 140. Monitor 146 provides a graphical and/or textual representation of the data. Monitor 146 may provide signal representations in various forms, such as waveforms, alerts, alarms, shutdowns, charts and/or graphs.

The operator supplied commands and parameters are used by computer 140 to provide information regarding the signal received from sensor assembly 124. More specifically, in the example embodiment, computer 140 informs operator when material 110 in reservoir 111 accumulates to a predefined threshold level. This threshold level may be programmed in sensor assembly 124 and/or electrical device 130.

In the example embodiment, computer 140 includes a device (not shown), for example, a floppy disk drive, CD-ROM drive, DVD drive, magnetic optical disk (MOD) device, or any other digital device including a network connecting device such as an Ethernet device for reading instructions and/or data from a computer-readable medium (not shown), such as a floppy disk, a CD-ROM, a DVD or another digital source such as a network or the Internet, as well as yet to be developed digital means. Computer 140 may execute instructions stored in firmware. Computer 140 is programmed to perform functions described herein, and as used herein, the term computer is not limited to just those integrated circuits generally known as computers, but broadly refers to computers, processors, microcontrollers, microcomputers, programmable logic controllers, application specific integrated circuits, and other programmable circuits, and these terms are used interchangeably herein. Additionally, although the herein described methods and systems are described in an industrial setting, it is contemplated that the benefits of the invention accrue to non-industrial systems as well.

During operation, material 110 is channeled from combustor section 120 to reservoir 111 via drain pipe 116. Moreover, sensor assemblies 124 detect the presence of material 110. When the accumulation of material 110 reaches the predefined threshold level within reservoir 111, sensor assemblies 124 detect the presence of material 110 and the detection is explained in more detail below. Sensor assemblies 124 then transmit an analog signal representative of the presence of material 110 (hereinafter referred to as a "detection analog signal") or a digital signal representative of the presence of material 110 (hereinafter referred to as a "detection digital signal"), to electrical device 130 for processing and/or analysis.

After electrical device 130 processes and/or analyzes the detection analog signal or the detection digital signal, the operator may observe the data via monitor 146. The operator is able to observe whether the material in reservoir 111 has reached or exceeded the predefined threshold level. If the threshold level is exceeded, the operator may prevent machine 112 from channeling any additional material 110 to reservoir 111 until the existing material 110 in reservoir 111 has been channeled to a disposal means.

By using a microwave emitter, sensor assembly 124 is able to have a longer measuring range and a higher frequency response as compared to known eddy current sensors, magnetic pickup sensors, or capacitive sensors that may be used with system 100. When using the microwave emitter to detect the presence of the material, the detection range is substantially extended as compared to known eddy current sensors, magnetic pickup sensors, or capacitive sensors that may be used to detect the presence of material 110. By using the microwave emitter, the locations where sensor assembly 124 may be used are much less limited as compared to sensor assemblies that may use known eddy current sensors, magnetic pickup sensors, or capacitive sensors. Because the frequency response is higher for the microwave emitter as compared to known eddy current, magnetic pickup sensors, or capacitive sensors, sensor assembly 124 is enabled to provide more accurate measurements.

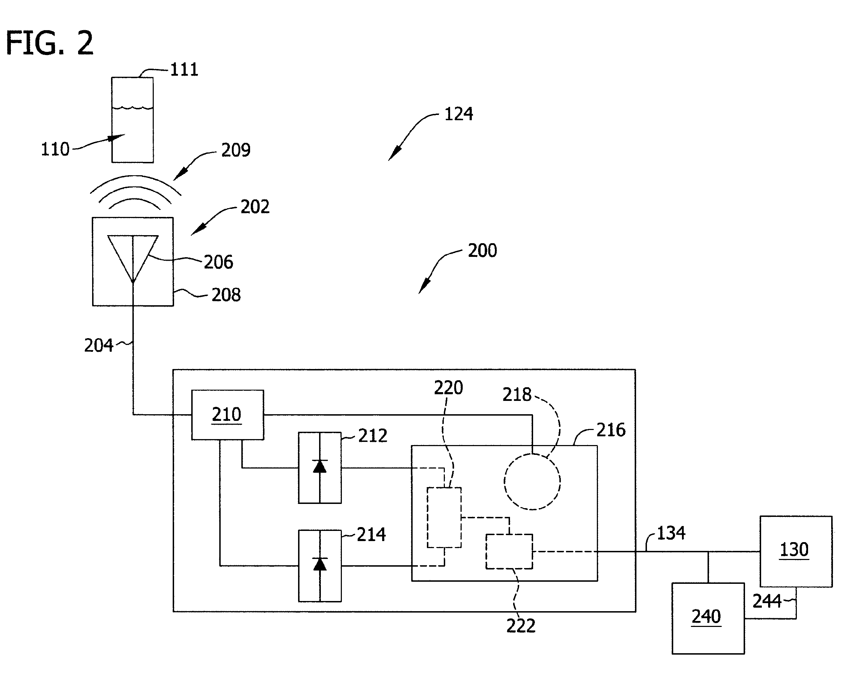

Fig. 2 is a block diagram of sensor assembly 124 that may be used with system 100 (shown in Fig. 1). Sensor assembly 124 includes a signal processing device 200 and a probe 202 that is coupled to signal processing device 200 via a data conduit 204. Alternatively, probe 202 may be wirelessly coupled to signal processing device 200. In the example embodiment, probe 202 is positioned proximate to reservoir 111. Alternatively, probe 202 may be positioned within reservoir 111.

Probe 202 includes an emitter 206 that is coupled to a probe housing 208 and for generating an electromagnetic field 209. Emitter 206 is coupled to signal processing device 200 via data conduit 204. Alternatively, emitter 206 may be wirelessly coupled to signal processing device 200. Probe 202 is a microwave probe 202 that includes a microwave emitter 206. Moreover, in the example embodiment, signal processing device 200 includes a directional coupling device 210 that is coupled to a transmission power detector 212, to a reception power detector 214, and to a signal conditioning device 216.

Signal conditioning device 216 includes a signal generator 218, a subtractor 220, and a threshold detection circuit 222. Threshold detection circuit 222 is coupled to electrical device 130 via data conduit 134 or via data conduit 136 (shown in Fig. 1). Threshold detection circuit 222 is programmed with at least one threshold value that is used to control a level of material 110 in reservoir 111.

Sensor assembly 124 includes a convertor 240 that is coupled to threshold detection circuit 222 and to electrical device 130. Convertor 240 is coupled to threshold detection circuit 222 via data conduit 134 and 136. Alternatively, convertor 240 may be wirelessly coupled to threshold detection circuit 222. In the example embodiment, convertor 240 is also coupled to electrical device 130 via a data conduit 244. Alternatively, convertor 240 may be wirelessly coupled to electrical device 130. In the example embodiment, convertor 240 is an analog-to-digital converter that converts at least one analog signal received from threshold detection circuit 222 to a digital signal. Alternatively, convertor 240 may be a digital-to analog converter that converts at least one digital signal received from threshold detection circuit 222 to an analog signal.

During operation, in the example embodiment, signal generator 218 generates at least one electrical signal at a microwave frequency (hereinafter referred to as a "microwave signal") that is equal to, and/or approximately equal to the resonant frequency of emitter 206. Signal generator 218 transmits the microwave signal to directional coupling device 210. Directional coupling device 210 in turn transmits the microwave signal to transmission power detector 212 and to emitter 206. As the microwave signal is transmitted through emitter 206, electromagnetic field 209 is emitted outward from emitter 206 and out of probe housing 208. If a material, such as material 110 enters electromagnetic field 209, an electromagnetic coupling may occur between material 110 and field 209. Because of the presence of material 110 within electromagnetic field 209, electromagnetic field 209 is disrupted because of an induction and/or capacitive effect within material 110 that may cause at least a portion of electromagnetic field 209 to be inductively and/or capacitively coupled to the object as an electrical current and/or charge. In such an instance, emitter 206 is detuned (i.e., a resonant frequency of emitter 206 is reduced and/or changed, etc.) and a loading is induced to emitter 206. The loading induced to emitter 206 causes a reflection of the microwave signal (hereinafter referred to as a "detuned loading signal") to be transmitted through data conduit 204 towards directional coupling device 210.

The detuned loading signal has a lower power amplitude and/or is at a different phase than the power amplitude and/or the phase of the microwave signal. Moreover, in the example embodiment, the power amplitude of the detuned loading signal is dependent upon the proximity of the object to emitter 206. Directional coupling device 210 transmits the detuned loading signal to reception power detector 214.

Reception power detector 214 measures an amount of power contained in the distortion signal and transmits a signal representative of the measured detuned loading signal power to signal conditioning device 216. Transmission power detector 212 detects an amount of power contained in the microwave signal and transmits a signal representative of the measured microwave signal power to signal conditioning device 216. Subtractor 220 receives the measured microwave signal power and the measured detuned loading signal power, and calculates a difference between the microwave signal power and the detuned loading signal power. Subtractor 220 transmits a signal representative of the calculated difference (hereinafter referred to as a "power difference signal") to threshold detection circuit 222.

Threshold detection circuit 222 transforms the power difference signal into an electrical output, such as a voltage output signal (i.e., the "detection analog signal") that exhibits a substantially linear relationship between the material and the amplitude of the detection analog signal. The detection analog signal is a binary output that is representative of the presence of material 110 proximate to sensor assemblies 124 and within electromagnetic field 209. More specifically, in the example embodiment, the binary output includes the numeric values 0 or 1, wherein 0 indicates that material 110 is not proximate to sensor assemblies 124 and not within electromagnetic field 209, and 1 indicates that material 110 is proximate to sensor assemblies 124 and within electromagnetic field 209. Alternatively, the detection analog signal may be any other type of output that enables sensor assembly 124 and system 100 to function as described herein.

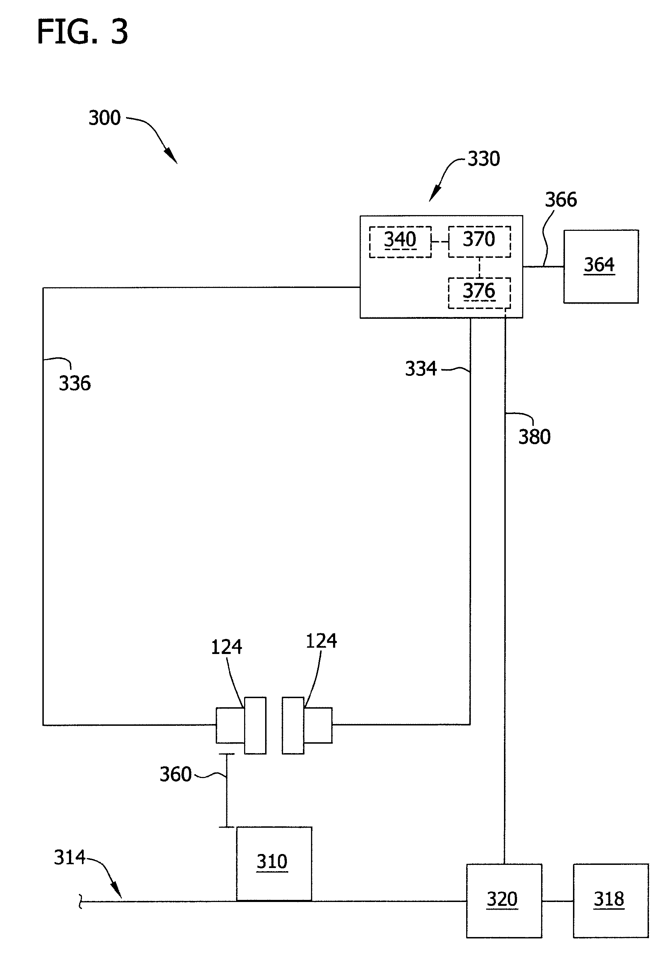

Threshold detection circuit 222 transmits the detection analog signal to either electrical device 130 with a scale factor enabled for processing and/or analysis within electrical device 130 or to convertor 240, wherein the detection analog signal is converted to a detection digital signal, prior to being transmitted to electrical device. In the example embodiment, electrical device 130 can use either analog or digital signal processing techniques, or as a hybrid combination of the two. For example, in the example embodiment, the detection analog signal has a scale factor of Volts per millimeter. Alternatively, the detection analog signal may have any other scale factor that enables electrical device 130 and/or system 100 to function as described herein. Fig. 3 illustrates an alternative embodiment of a system 300 that may be used in detecting the presence of a material 310 that uses sensor assembly 124. In the example embodiment, material 310 is a metal object. More specifically, object 310 is an aluminum can. Alternatively, material 310 may be a liquid, a non-metallic object, and/or any other substance that enables system 300 to function as described herein.

Moreover, in the example embodiment, system 300 includes a platform 314, such as a conveyor belt. In the example embodiment, at least one object, such as object 310 is positioned on platform 314. Moreover, platform 314 is movable such that object 310 positioned on platform 314 may be channeled to a container 318. An entry 320 is positioned on platform 314 and, in the example embodiment, entry 320 opens and closes to enable channeling object 310 to container 318. Whether entry 320 opens or closes is based on an electrical signal.

In the example embodiment, system 300 includes at least one sensor assembly 124 that monitors material 310 on platform 314. More specifically, in the example embodiment, system 300 includes two sensor assemblies 124. Alternatively, system 300 may include any number of sensor assemblies. Moreover, alternatively, each sensor assembly 124 may monitor and/or detect any other condition of system 300 that enables system 300 to function as described herein. Each sensor assembly 124, in the example embodiment, is positioned in close proximity to platform and/or material 310 as material 310 approaches sensor assembly 124 on platform 314. Such a location enables each sensor assembly 124 to accurately detect the presence of material 310 as it approaches sensor assembly 124 on platform 314. Alternatively, each sensor assembly 124 may be positioned in any relative location within system 300 that enables system 300 to function as described herein.

In the example embodiment, system 300 includes an electrical device 330 that is coupled to one or more sensor assemblies 124. More specifically, in the example embodiment, each sensor assembly 124 is coupled to electrical device 330 via a data conduit 334 or via a data conduit 336. Alternatively, sensor assemblies 124 may be wirelessly coupled to electrical device 330.

In the example embodiment, electrical device 330 is a control system. Alternatively, electrical device 330 may be any other type of an electrical device, such as a diagnostic system and/or a display device that enables system 300 to function as described herein. More specifically, in the example embodiment, electrical device 330 is a real-time controller that includes any suitable processor-based or microprocessor-based system, such as a computer system, that includes microcontrollers, reduced instruction set circuits (RISC), application-specific integrated circuits (ASICs), logic circuits, and/or any other circuit or processor that is capable of executing the functions described herein. In one embodiment, electrical device 330 may be a microprocessor that includes read-only memory (ROM) and/or random access memory (RAM), such as, for example, a 32 bit microcomputer with 2 Mbit ROM and 64 Kbit RAM. As used herein, the term "real-time" refers to outcomes occurring in a substantially short period of time after a change in the inputs affect the outcome, with the time period being a design parameter that may be selected based on the importance of the outcome and/or the capability of the system processing the inputs to generate the outcome.

In the example embodiment, electrical device 330 includes a memory area 340 that stores executable instructions and/or one or more operating parameters representing and/or indicating an operating condition of entry 320. More specifically, in the example embodiment, memory area 340 stores a predefined range of a proximity of material 310 that is spaced a predefined distance 360 from sensor assembly 110. This predefined range is received from a user computing device 364 that is coupled to electrical device 330 via a network 366. Network 366 may include, but is not limited to, the Internet, a local area network (LAN), a wide area network (WAN), a wireless LAN (WLAN), a mesh network, and/or a virtual private network (VPN). User computing device 364 and electrical device 330 communicate with each other and/or network 366 using a wired network connection (e.g., Ethernet or an optical fiber), a wireless communication means, such as radio frequency (RF), an Institute of Electrical and Electronics Engineers (IEEE) 802.11 standard (e.g., 802.11(g) or 802.11(n)), the Worldwide Interoperability for Microwave Access (WIMAX) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of the Institute of Electrical and Electronics Engineers, Inc., of New York, New York.

In the example embodiment, electrical device 330 also includes a processor 370 that is coupled to memory area 340 and that is programmed to calculate a condition of entry 320 based at least in part on one or more operating parameters. In one embodiment, processor 370 may include a processing unit, such as, without limitation, an integrated circuit (IC), an application specific integrated circuit (ASIC), a microcomputer, a programmable logic controller (PLC), and/or any other programmable circuit. Alternatively, processor 370 may include multiple processing units (e.g., in a multicore configuration). More specifically, in the example embodiment, processor 370 is programmed to determine whether entry 320 should be opened or closed based on whether presence of material 310 is detected on platform 314. In addition, processor 370 may also be programmed to count each object 310 that sensor assemblies 124 detect.

In the example embodiment, electrical device 330 also includes a control interface 376 that is configured to control an operation of entry 320. Moreover, in the example embodiment, control interface 376 is coupled to entry 320 via a data conduit 380. Alternatively, control interface 376 may be wirelessly coupled to entry 320. In the example embodiment, control interface 376 is configured to transmit an electrical signal to entry 320 via data conduit 380 in order to open or close entry 320.

During operation, in the example embodiment, as material 310 approaches sensor assemblies 124 the presence of material 110 is detected by each sensor assembly 124 and each sensor assembly 124 transmits an analog signal representative of the presence of material 110 (i.e., the "detection analog signal") to electrical device 130 for processing and/or analysis. More specifically, in the example embodiment, signal generator 218 (shown in Fig. 2) generates at least one electrical signal at a microwave frequency (hereinafter referred to as a "microwave signal") that is equal and/or approximately equal to the resonant frequency of emitter 206 (shown in Fig. 2). Signal generator 218 transmits the microwave signal to directional coupling device 210 (shown in Fig. 2). Directional coupling device 210 in turn transmits the microwave signal to transmission power detector 212 (shown in Fig. 2) and to emitter 206. As the microwave signal is transmitted through emitter 206, electromagnetic field 209 (shown in Fig. 2) is emitted outward from emitter 206 and out of probe housing 208 (shown in Fig. 2). If a material, such as material 310 enters electromagnetic field 209, an electromagnetic coupling may occur between material 310 and field 209. More specifically, because of the presence of material 310 within electromagnetic field 209, electromagnetic field 209 is disrupted because of an induction and/or capacitive effect within material 310 that may cause at least a portion of electromagnetic field 209 to be inductively and/or capacitively coupled to the object as an electrical current and/or charge. In such an instance, emitter 206 is detuned (i.e., a resonant frequency of emitter 206 is reduced and/or changed, etc.) and a loading is induced to emitter 206. The loading induced to emitter 206 causes a reflection of the microwave signal (i.e., the "detuned loading signal") to be transmitted through data conduit 204 (shown in Fig. 2) towards directional coupling device 210.

In the example embodiment, the detuned loading signal has a lower power amplitude and/or is at a different phase than the power amplitude and/or the phase of the microwave signal. Moreover, in the example embodiment, the power amplitude of the detuned loading signal is dependent upon the proximity of material 310 to emitter 206. Directional coupling device 210 transmits the detuned loading signal to reception power detector 214 (shown in Fig. 2).

In the example embodiment, reception power detector 214 measures an amount of power contained in the distortion signal and transmits a signal representative of the measured detuned loading signal power to signal conditioning device 216 (shown in Fig. 2). Transmission power detector 212 detects an amount of power contained in the microwave signal and transmits a signal representative of the measured microwave signal power to signal conditioning device 216. In the example embodiment, subtractor 220 (shown in Fig. 2) receives the measured microwave signal power and the measured detuned loading signal power, and calculates a difference between the microwave signal power and the detuned loading signal power. Subtractor 220 transmits a signal representative of the calculated difference (i.e., the "power difference signal") to threshold detection circuit 222 (shown in Fig. 2) that is programmed with a threshold value for the proximity of material 310 to emitter 206. More specifically, in the example embodiment, threshold detection circuit 222 is programmed with a value representative of whether material 310 is in proximity to emitter 206 and whether material 310 is within electromagnetic field 209.

In the example embodiment, threshold detection circuit 222 transforms the power difference signal into an electrical output, such as a voltage output signal (i.e., the "detection analog signal") that exhibits a substantially linear relationship between the material and the amplitude of the detection analog signal. Moreover, in the example embodiment, the detection analog signal is a binary output that is representative of the presence of the material 310 proximate to sensor assemblies 124 and within electromagnetic field 209. More specifically, in the example embodiment, the binary output includes the numeric values 0 or 1, wherein 0 indicates that material 310 is proximate to sensor assemblies 124 and not within electromagnetic field 209, and 1 indicates that material 310 is proximate to sensor assemblies 124 and within electromagnetic field 209. Alternatively, the detection analog signal may be any other type of output that enables sensor assembly 124 and system 300 to function as described herein.

Moreover, in the example embodiment, threshold detection circuit 222 transmits the detection analog signal to electrical device 330 with a scale factor enabled for processing and/or analysis within electrical device 330. After electrical device 330 processes and/or analyzes the detection analog signal, control interface 376 transmits an electrical signal to entry 320 via data conduit 380. In the example embodiment, entry 320 is then opened such that material 310 may be channeled to container 318.

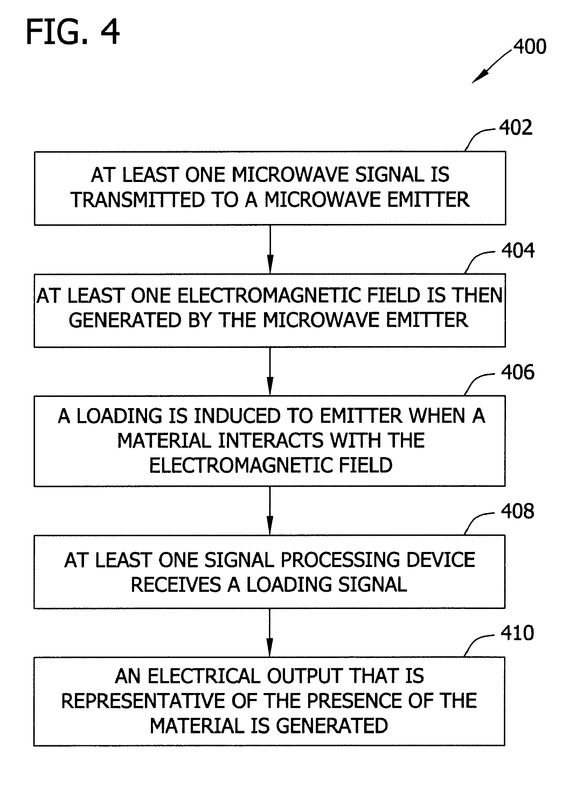

Fig. 4 is an example method 400 that may be used to detect a presence of a material, such as material 110 (shown in Fig. 1) or material 310 (shown in Fig. 3) using a sensor assembly, such as sensor assembly 124 (shown in Figs. 1, 2 and 3). In the example embodiment, at least one microwave signal is transmitted 402 to a microwave emitter 206 (shown in Fig. 2). At least one electromagnetic field 209 (shown in Fig. 2) is then generated 404 by emitter 206 from the microwave signal. A loading is then induced 406 to emitter 206 when material 110 or 310 interacts with electromagnetic field 209, wherein at least one loading signal that is representative of the loading is reflected within a data conduit 204 (shown in Fig. 2) from microwave emitter 206. At least one signal processing device 200 (shown in Fig. 2) receives 408 the loading signal. An electrical output that is representative of the presence of material 110 or material 310 is then generated 410.

The detection of the presence, or the detection of a non-presence of material 110 or material 310 may be used in various applications. In one embodiment, the detection of material 110 may be used to accurately monitor the level of material 110 in a reservoir 111 (shown in Fig. 1) coupled to a machine 112 (shown in Fig. 1). In another embodiment, an entry 320 (shown in Fig. 3) may be opened or closed based on the detection of the presence of material 310.

The above-described embodiments provide an efficient and cost-effective sensor assembly for use in detecting a presence of a material. In particular, the embodiments described herein provide a sensor assembly that detects the presence of a material using a microwave emitter. Moreover, the detection of the presence, or the lack of presence, of the material may be used in various applications, such as control systems. For example, such detection methods may be used for a switch application, a level detector, or a counter for applications used in various systems including, but not limited to, manufacturing systems, processing systems, chemical systems and safety systems. Microwave emitter based sensor assemblies provide a longer measuring range and a higher frequency response as compared to known eddy current sensors, magnetic pickup sensors, or capacitive sensors used with known systems. As such, when using the microwave emitter to detect the presence of the material, the detection range is substantially extended as compared to known eddy current sensors, magnetic pickup sensors, or capacitive sensors that may be used to detect the presence of a material. Moreover, the locations where the sensor assembly may be used are much less limited as compared to sensor assemblies that use known eddy current sensors, magnetic pickup sensors, or capacitive sensors. Moreover, because the frequency response is higher for the microwave emitter as compared to known eddy current, magnetic pickup sensors, or capacitive sensors, the sensor assembly discussed herein is enabled to provide more accurate measurements.

Example embodiments of a sensor assembly and a method for detecting a presence of a material are described above in detail. The method and sensor assembly are not limited to the specific embodiments described herein, but rather, components of the sensor assembly and/or steps of the method may be utilized independently and separately from other components and/or steps described herein. For example, the sensor assembly may also be used in combination with other systems and methods, and is not limited to practice with only the system as described herein. Rather, the example embodiment can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A sensor assembly (124) for use in a system (100), said sensor assembly comprising:
at least one probe for use in detecting the presence of a material (110) within the system, said at least one probe comprises a microwave emitter (206) that generates at least one electromagnetic field (209) from at least one microwave signal, wherein a loading is induced to said microwave emitter when the material interacts with the at least one electromagnetic field;
a data conduit (204) coupled to said microwave emitter, wherein at least one loading signal representative of the loading is reflected within said data conduit from said microwave emitter; and
at least one signal processing device (200) coupled to said microwave emitter via said data conduit, said at least one signal processing device is configured to receive the at least one loading signal and to generate an electrical output that is representative of the presence of the material, wherein the electrical output is usable by at least one of an operator and the system.

2. A sensor assembly (124) in accordance with claim 1, wherein said at least one signal processing device (200) further comprises a threshold detection circuit (222).

3. A sensor assembly (124) in accordance with claim 2, wherein said threshold detection circuit (222) is programmed with at least one threshold value such that the electrical output that is representative of the presence of the material (110) is based on the at least one threshold value.

4. A sensor assembly (124) in accordance with claim 2 or claim 3, further comprising a convertor (240) coupled to said threshold detection circuit (222), wherein said convertor is configured to convert the electrical output to a digital signal.

5. A sensor assembly (124) in accordance with any one of claims 1 to 4, wherein the electrical output is an analog signal.

6. A sensor assembly (124) in accordance with any one of claims 1 to 5, wherein the material (110) is a liquid.

7. A sensor assembly (124) in accordance with any one of claims 1 to 6, wherein the material (110) is at least one of a metallic object and a non-metallic object.

8. A system (100) for use in detecting a presence of a material (110), said system comprising:
at least one sensor assembly (124) in accordance with any one of claims 1 to 7; and
an electrical device (130) coupled to said at least one sensor assembly.

9. A system (100) in accordance with claim 8, wherein said electrical device (130) is at least one of a control system and a diagnostic system.

10. A method for use in detecting a presence of a material (110), said method comprising:
transmitting at least one microwave signal to a microwave emitter (206);
generating, by the microwave emitter (206), at least one electromagnetic field (209) based on the at least one microwave signal;
inducing a loading to the microwave emitter (206) when the material (110) interacts with the at least one electromagnetic field (209), wherein at least one loading signal representative of the loading is reflected within a data conduit (204) from the microwave emitter;
receiving, by at least one signal processing device (200), the at least one loading signal; and
generating an electrical output that is representative of the presence of the material (110), wherein the electrical output is usable by at least one of an operator and the system.

11. A method is accordance with claim 10, further comprising programming a threshold detection circuit (222) with at least one threshold level, wherein the electrical output that is representative of the presence of the material (110) is based on the at least one threshold level.

12. A method in accordance with claim 10 or claim 11, wherein inducing a loading to the microwave emitter (206) further comprises inducing a loading to the microwave emitter when a liquid interacts with the at least one electromagnetic field.

13. A method in accordance with claim 10 or claim 11, wherein inducing a loading to the microwave emitter (206) further comprises inducing a loading to the microwave emitter when at least one of a metallic object and a non-metallic object interacts with the at least one electromagnetic field.

14. A method in accordance with any one of claims 10 to 13, wherein generating an electrical output further comprises generating an analog signal, the method preferably further comprising converting the analog signal to a digital signal via a converter.

15. A method in accordance with any one of claims 10 to 14, wherein transmitting at least one microwave signal further comprises transmitting, to the microwave emitter (206), at least one microwave signal that is approximately equal to a resonant frequency of the microwave emitter (206).
